# EUROPÄISCHE PATENTSCHRIFT

(11) **EP 4 324 632 B1**
(45) Veröffentlichungstag und Bekanntmachung des Hinweises auf die Patenterteilung: **11.12.2024**
(21) Anmeldenummer: 22190398.2
(22) Anmeldetag: 15.08.2022
(51) Int. Cl.: B29D 23/18, B29C 48/00, B29C 48/151, B29C 44/24

(54) **VERFAHREN UND HERSTELLUNGSANLAGE ZUR HERSTELLUNG EINES WÄRMEISOLIERTEN LEITUNGSROHRS**
METHOD AND PRODUCTION PLANT FOR PRODUCING A HEAT-INSULATED CONDUIT
PROCÉDÉ ET INSTALLATION DE FABRICATION POUR LA FABRICATION D'UNE CONDUITE ISOLÉE THERMIQUEMENT

(43) Veröffentlichungstag der Anmeldung: 21.02.2024
(73) Patentinhaber: Brugg Rohr AG Holding, 5200 Brugg (CH)
(72) Erfinder: DAMBOWY, Christian, 5412 Gebenstorf (CH); KRESS, Jürgen, 8966 Oberwil-Lieli (CH); CHIAVELLO, Antonino, 5322 Koblenz (CH)
(74) Vertreter: E. Blum & Co. AG

(56) Entgegenhaltungen:
- EP-A1- 2 213 440
- WO-A1-2019/214954

## Beschreibung

### Hintergrund

Die Erfindung betrifft ein Verfahren zur kontinuierlichen Herstellung eines wärmeisolierten Leitungsrohrs und eine Herstellungsanlage zur Durchführung des Verfahrens gemäss dem jeweiligen unabhängigen Anspruch.

### Stand der Technik

Aus WO2019/214954 A1 ist ein Verfahren zur kontinuierlichen Herstellung eines wärmeisolierten Leitungsrohrs bekannt, bei dem das wärmeisolierte Leitungsrohr im fertigen Zustand ein gewelltes Aussenrohr aus Kunststoff, mindestens ein im Aussenrohr angeordnetes Innenrohr und einen ausgehärteten Isolierschaum zwischen dem Innenrohr und dem Aussenrohr umfasst. Dieses Verfahren hat sich bewährt und führt zu wärmeisolierten Leitungsrohren von hoher Qualität. Mit dem Verfahren hergestellte Leitungsrohre werden z.B. in der Nah- und Fernwärmeversorgung oder bei industriellen Anwendungen eingesetzt.

Bei diesem Verfahren wird zwischen Innenrohr und Aussenrohr ein Folienschlauch eingeführt. Das den Isolierschaum bildende Material wird zwischen dem Innenrohr und dem Folienschlauch eingeführt und expandiert in diesem Raum nachdem das Aussenrohr korrugiert wurde. Aufgrund der Verwendung des Folienschlauchs ist es möglich die Expansion des Isolierschaums zum Aussenrohr hin zu begrenzen, so dass der Isolierschaum nicht oder nur zum Teil die Wellung des Aussenrohrs ausfüllen kann. Diese Massnahme erlaubt beim fertigen Leitungsrohr eine erhöhte Flexibilität, mit anderen Worten geringe Biegeradien die je nach Rohrdimension unterschiedlich sind. Dadurch wird die Verlegung des Leitungsrohrs vereinfacht.

Ein wärmeisoliertes Leitungsrohr für die Wärmeversorgung ist unter der Bezeichnung CALPEX^{®} bekannt und weist z.B. in einer Dimensionierung mit einem Aussenrohrdurchmesser von 162 mm einen Biegeradius von 1,2 Metern auf.

Weiter ist aus EP3871873 A1 ein thermisch gedämmtes Leitungsrohr bekannt, das gemäss dem Verfahren aus der oben genannten WO2019/214954 A1 hergestellt wird und bei dem der Biegeradius unter anderem durch die Verwendung spezieller Materialien wie LD-PE oder LLD-PE oder Mischungen davon, die eine hohe Flexibilität bzw. ein tiefes Elastizitätsmodul aufweisen, für das Aussenrohr, auch Aussenmantel genannt, unter Einhaltung geltender Normen weiter reduziert werden kann.

Bei dieser Art der Herstellung des genannten Leitungsrohrs mit LD-PE oder LLD-PE oder LD-PE-haltigem oder LLD-PE-haltigem Aussenrohr ergibt sich einerseits aufgrund der mit dem LD-PE oder LLD-PE einhergehenden geringen Steifigkeit des gewellten Aussenrohrs (im Gegensatz zu HD-PE-Aussenrohre) und andererseits aufgrund des Aufschäumens des Isolierschaums erst nach dem Korrugator das Problem, dass das Innenrohr nicht auf bekannte Weise mittels einer Zentriervorrichtung relativ zum Aussenrohr zentriert werden kann. Eine möglichst genaue Zentrierung ist aber erstrebenswert um möglichst überall entlang des fertigen Leitungsrohrs eine gleichmässige Dicke des Isolierschaums und somit eine gleichmässige Isolation und Stabilität zu erhalten.

### Darstellung der Erfindung

Der Erfindung liegt die Aufgabe zu Grunde ein wärmeisoliertes Leitungsrohr bereitzustellen, das bei gleichzeitiger hoher Flexibilität der oben beschriebenen Rohre mit LD-PE oder LLD-PE oder LD-PE-haltigem oder LLD-PE-haltigem Aussenrohr mindestens die gleiche Genauigkeit der Gleichmässigkeit der Dicke des Isolierschaums bzw. eine maximal vorgeschriebene Innenrohr-Koaxialabweichung wie bei den oben genannten CALPEX^{®} Leitungsrohren aufweist.

Die Aufgabe wird **in einem ersten Aspekt** der Erfindung mit dem eingangs genannten Verfahren erreicht. Bei diesem Verfahren zur kontinuierlichen Herstellung eines wärmeisolierten Leitungsrohrs mittels einer Herstellungsanlage, umfasst das wärmeisolierte Leitungsrohr im fertigen Zustand ein Aussenrohr aus LLD-PE oder LLD-PE-haltigem Kunststoff, mindestens ein im Aussenrohr angeordnetes Innenrohr und einen ausgehärteten Isolierschaum zwischen dem Innenrohr und dem Aussenrohr. Die Herstellung des wärmeisolierten Leitungsrohrs wird in einer im Wesentlichen horizontalen Herstellungsrichtung x durch verschiedene Stationen der Herstellungsanlage durchgeführt. Das Verfahren umfasst die Schritte:
a) Bilden eines Folienschlauchs um das mindestens eine Innenrohr und Einbringen eines aufschäumbaren Ausgangsmaterials in den Folienschlauch, welches Ausgangsmaterial zu einem Isolierschaum expandiert und der Isolierschaum aushärtet, wobei der ausgehärtete Isolierschaum im fertigen Leitungsrohr mindestens einen Teil des Raums zwischen Innenrohr und Aussenrohr ausfüllt,
b) Hindurchführen des Innenrohrs mit dem Folienschlauch und dem aufschäumbaren Ausgangsmaterial durch einen Extrusionskopf, mittels welchem das Aussenrohr um das Innenrohr mit dem Folienschlauch extrudiert wird, so dass ein Halbzeug entsteht,
c) Bilden einer Wellung des Aussenrohrs in einem Korrugator um ein gewelltes Aussenrohrs zu erzeugen,
   wobei das aufschäumbare Ausgangsmaterial vor dem Einbringen in den Folienschlauch derart gebildet wird, dass es im Wesentlichen erst beim Austritt des Halbzeugs aus dem Korrugator zu expandieren beginnt und dabei eine Schaumfront bildet,
d) Detektieren einer Position der Längsachse des gewellten Aussenrohrs bezogen auf die Position der Längsachse des mindestens einen Innenrohrs mittels einer Detektionsvorrichtung,
e) im Falle, dass beim Schritt d) die Längsachsen nicht in einer bestimmungsgemässen Position zueinander angeordnet sind, Anpassen der Position des gewellten Aussenrohrs bezogen auf das Innenrohr mittels einer Positionierungsvorrichtung, bis seine Längsachse in der bestimmungsgemässen Position zur Längsachse des Innenrohrs angeordnet ist,
f) Fixieren des Aussenrohrs in der bestimmungsgemässen Position.

Ein **zweiter Aspekt** der Erfindung betrifft eine Herstellungsanlage zur Durchführung des Verfahrens gemäss dem ersten Aspekt der Erfindung. Die Herstellungsanlage umfasst in Herstellungsrichtung x nacheinander gesehen folgende Stationen:
eine Isolierschaumvorbereitungsvorrichtung umfassend eine Formschulter zum kontinuierlichen Umwickeln des Innenrohrs mit dem Folienschlauch und einen Einspritzkopf zum Einbringen des aufschäumbaren Ausgangsmaterials zwischen dem Folienschlauch und dem Innenrohr,
einen Extruder zum Extrudieren des Aussenrohrs um das Innenrohr mit dem Folienschlauch und dem aufschäumbaren Ausgangsmaterial, womit ein Halbzeug entsteht,
einen Korrugator zur Erzeugung einer Wellung im Aussenrohr,
ein Schutzrohr zum Schutz des Innenrohrs mit dem Folienschlauch und dem aufschäumbaren Ausgangsmaterial während der Extrusion und/oder Korrugation des Aussenrohrs,
eine Positionierungsvorrichtung zum Anpassen der Position des Aussenrohrs bezogen auf das Innenrohr, und
eine Detektionsvorrichtung zum Detektieren einer Position der Längsachse des Aussenrohrs bezogen auf die Position der Längsachse des mindestens einen Innenrohrs.

Beim vorliegenden erfindungsgemässen Herstellungsverfahren und entsprechend bei der vorliegenden erfindungsgemässen Herstellungsanlage wird der allgemein bekannte Weg der Zentrierung des Innenrohrs im Aussenrohr verlassen und es wird umgekehrt das Innenrohr als Referenz genommen und die Position des gewellten Aussenrohrs bezogen auf das Innenrohr angepasst, was sich in Schritt e) des Verfahrens bzw. in der Positionierungsvorrichtung der Herstellungsanlage widerspiegelt. Ein weiterer Unterschied zur bekannten Vorgehensweise ist, dass die Zentrierung nicht vor dem Korrugator sondern nach dem Korrugator stattfindet.

Das mit dem vorliegenden erfindungsgemässen Herstellungsverfahren unter Verwendung der vorliegenden erfindungsgemässen Herstellungsanlage hergestellte Leitungsrohr wird bevorzugt als Fernwärmerohr verwendet.

Die vorliegende Erfindung hat den Vorteil, dass das fertige Leitungsrohr mit mindestens der gleichen Genauigkeit bei der Zentrierung der konzentrischen Rohre wie bisher bekannt, jedoch mit gleichzeitig erhöhter Flexibilität hergestellt werden kann. Mit anderen Worten wird die oben erwähnte zulässige Innenrohr-Koaxialabweichung von maximal 3 mm, die beim oben erwähnten CALPEX^{®} Leitungsrohr gilt, auch für das Leitungsrohr gemäss der vorliegenden Erfindung eingehalten. Diese Koaxialabweichung bedeutet, dass die Längsachse des Innenrohrs und des Aussenmantels maximal 3 mm voneinander abweichen dürfen. Umgerechnet auf die Isolierschicht-Dicke würde das bedeuten, dass die Isolierschicht-Dicke demnach bis maximal 6 mm variiert. Damit wird ein Leitungsrohr bereitgestellt, das bezüglich Innenrohr-Zentrizität mindestens die Genauigkeit bekannter vergleichbarer Leitungsrohre erfüllt und gleichzeitig flexibler ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 schematisch eine erfindungsgemässe Herstellungsanlage;
Fig. 2 schematisch eine Detailansicht des Abschnitts A aus Fig. 1;
Fig. 3 schematisch im Querschnitt entlang der Linie B aus Fig. 2 ein mit dem erfindungsgemässen Verfahren und der erfindungsgemässen Herstellungsanlage gefertigtes Leitungsrohr mit einem Innenrohr; und
Fig. 4 schematisch im Querschnitt entlang der Linie B aus Fig. 2 ein mit dem erfindungsgemässen Verfahren und der erfindungsgemässen Herstellungsanlage gefertigtes Leitungsrohr mit zwei Innenrohren.

### Wege zur Ausführung der Erfindung

### Definitionen:

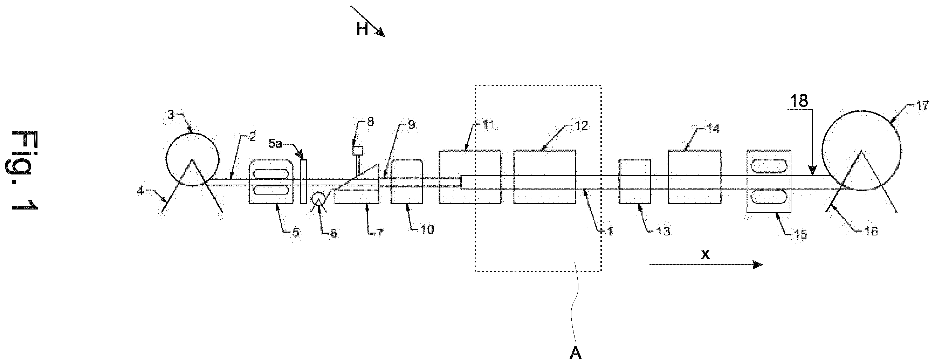

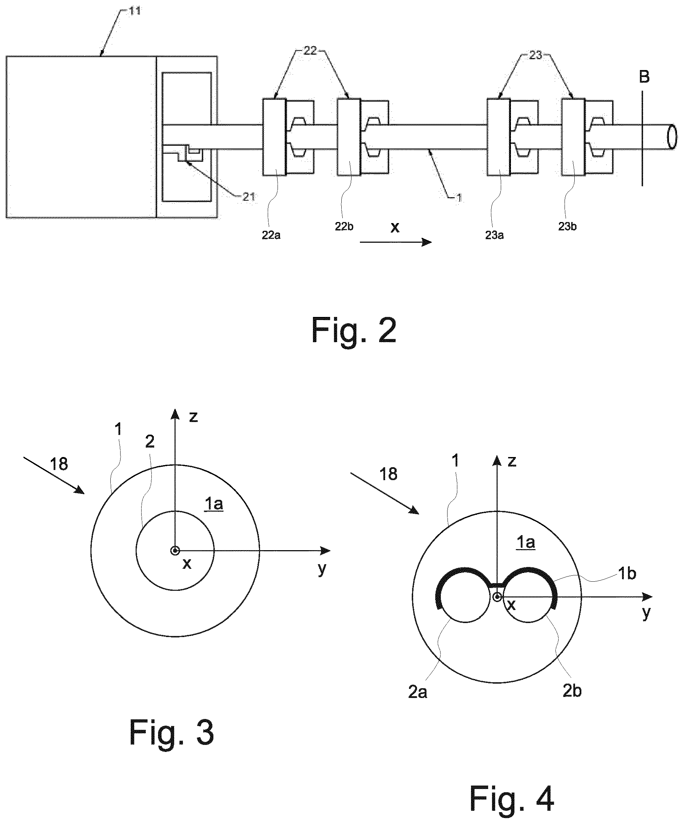

Die Herstellungsrichtung x wird als horizontal definiert, wie in Fig. 1 eingezeichnet. In Fig. 1 ist die Herstellungsanlage lediglich aus Gründen der klareren Darstellung vertikal eingezeichnet. In Fig. 3 und 4 ist sie als senkrecht aus der Zeichenebene hinausragend zu interpretieren.

Eine erste Anpassungsrichtung für das Aussenrohr ist die y-Richtung, welche auch horizontal und senkrecht zur Herstellungsrichtung x ist, wie in Fig. 3 und 4 eingezeichnet. Eine "Anpassung" einer Position in y-Richtung umfasst grundsätzlich eine Verschiebung in +y-Richtung und/oder -y-Richtung.

Eine zweite Anpassungsrichtung für das Aussenrohr ist die z-Richtung, welche vertikal und senkrecht zur Herstellungsrichtung x ist, wie in Fig. 3 und 4 eingezeichnet. Eine "Anpassung" einer Position in z-Richtung umfasst grundsätzlich eine Verschiebung in +z-Richtung und/oder -z-Richtung.

Die Isolation des Leitungsrohrs wird je nach Zustand unterschiedlich genannt. Als "aufschäumbares Ausgangsmaterial" wird ein flüssiges Material definiert, welches noch nicht schäumt. Ein solches Material ist bekannt und besteht normalerweise aus einer Zusammensetzung von mindestens zwei flüssigen Komponenten welche miteinander reagieren können und dabei schäumen. Es können weitere Komponenten beigemischt sein, z.B. Komponenten zur Reaktionsverzögerung um die Bildung des Schaums zu verzögern. Unter "expandierendem Isolierschaum" wird im vorliegenden Kontext ein Gemisch verstanden, welches sich bereits im Zustand der chemischen Reaktion befindet, was sich in Schaumbildung mit einer langsamen Expansion bemerkbar macht. Dabei ist die Reaktion als noch nicht abgeschlossen und der Schaum ist als noch in allen einen Freiraum bietenden Richtungen expandierend anzunehmen. Ein "ausgehärteter Isolierschaum" bedeutet hier, dass die Reaktion der zwei flüssigen Komponenten abgeschlossen ist und der Schaum einen getrockneten Zustand als Feststoff erreicht hat und nicht mehr von sich aus expandieren kann. Unter "Schaumfront" wird eine Position in Herstellungsrichtung x verstanden, in welcher der noch expandierende Isolierschaum den obersten Punkt des weiter unten beschriebenen Folienschlauchs erreicht hat. Die Schaumfront schreitet unter kontinuierlicher Weiterbildung von Isolierschaum in x-Richtung voran.

Als fertiges Leitungsrohr wird das Leitungsrohr definiert, welches zur Auslieferung auf eine Trommel aufgewickelt werden kann. Bis zu diesem Zeitpunkt wird das Leitungsrohr u.a. als Halbzeug definiert, wobei im Verlauf der Beschreibung auch nur auf die im jeweiligen Kontext interessierenden Bestandteile des Halbzeugs Bezug genommen wird. Der Begriff "Halbzeug" ist nach jedem Herstellungsschritt als neu definiert mit den zusätzlichen Eigenschaften dieses letzten Herstellungsschritts anzusehen.

Die "erhöhte Flexibilität" des erfindungsgemässen Leitungsrohrs bezieht sich auf den Vergleich mit einem HDPE-Leitungsrohr des Stands der Technik mit gleicher Abmessung. Das hier verwendete Mass für die Flexibilität ist der Elastizitätsmodul (E-Modul). HDPE-Leitungsrohre haben bekannterweise einen E-Modul zwischen 900 MPa und 1500 MPa. Mit dem erfindungsgemässen Verfahren lassen sich erfindungsgemässe Leitungsrohre mit einem E-Modul kleiner als 700 MPa erreichen, was eine erheblich höhere Flexibilität bedeutet.

**Fig. 1** zeigt schematisch stark vereinfacht eine Herstellungsanlage H zur Herstellung eines wärmeisolierten Leitungsrohrs 18, welche in Herstellungsrichtung x eine Anzahl von verschiedenen Stationen aufweist. Mit Bezug auf Fig. 3 umfasst das fertige Leitungsrohr 18 ein gewelltes Aussenrohr 1, ein Innenrohr 2 und einen ausgehärteten Isolierschaum 1a zwischen den beiden Rohren 1, 2. Der bereits erwähnte Folienschlauch, der auch im fertigen Leitungsrohr verbleibt ist nicht gezeigt. Durch das Innenrohr, das auch Mediumrohr genannt wird, fliesst das zu transportierende Medium, z.B. heisses Wasser für die Fernwärme.

Wieder mit Bezug auf Fig. 1 wird ein Innenrohr 2 in einem ersten Schritt ab einer Vorratsrolle 3 mittels eines dem Fachmann bekannten Abwicklers 4 kontinuierlich abgewickelt und der Herstellungsanlage H zugeführt. Alternativ können der Herstellungsanlage Innenrohrstangen einer bestimmten Länge zugeführt werden, welche zur Bildung eines kontinuierlichen Rohrs miteinander verbunden werden. Das Innenrohr kann ein Kunststoffrohr oder auch ein Metallrohr sein und es kann glatt oder gewellt sein. Insbesondere findet ein Innenrohr 2 aus vernetztem Polyethylen Verwendung. Das Innenrohr 2 wird durch eine Bremsraupe 5 geführt, deren Zweck später erläutert wird.

In einem weiteren optionalen aber bevorzugten Teilschritt wird das Innenrohr 2 vor dem nächsten Schritt mittels einer Zentriervorrichtung 5a in einer zu erwartenden zentrierten Position gehalten. Dabei soll das Innenrohr grob so positioniert werden, dass seine Längsachse möglichst zentral im später extrudierten Aussenrohr angeordnet ist. Diese Zentrierung ist nur grob möglich da das Aussenrohr an dieser Stelle noch gar nicht vorhanden ist. Eine solche Zentriervorrichtung ist bekannt und umfasst z.B. Zentrierbacken. Der Grund für diesen Teilschritt ist u.a. zu ermöglichen, dass das im nächsten Schritt eingebrachte flüssige aufschäumbare Material rings um das Innenrohr fliessen kann. Es wird dadurch bei Innenrohren aus Kunststoff die Eventualität vermieden, dass das Innenrohr aufgrund von unvermeidbarem Durchhängen bodenseitig eine Blockade für das aufschäumbare Material darstellt. Dieser Schritt kann bei Innenrohren aus Metall entfallen da diese inhärent steif sind und nur unwesentlich durchhängen.

Im nächsten Schritt wird von einer Vorratsspule eine Kunststofffolie 6, insbesondere eine Polyethylenfolie, abgezogen und über eine Formschulter 7 geführt. Die Formschulter 7 ist derart ausgestaltet, dass sie die Kunststofffolie als Folienschlauch 6 um das Innenrohr 2 konzentrisch zu diesem umlenkt. Der Folienschlauch 6 wird mit einer verklebten oder verschweissten Längsnaht geformt, wobei vor dieser Siegelung mittels eines Mischkopfes 8, insbesondere eines PUR-2-Komponenten Mischkopfes, ein aufschäumbares Material das ein flüssiges Kunststoffgemisch ist in das Innere des Folienschlauchs eingebracht wird, was bekannt ist und hier nicht im Detail beschrieben wird. Der Folienschlauch ist z.B. ein Kunststoff auf Polyethylenbasis. Durch die Verwendung des Folienschlauchs 6 wird die spätere Expansion des Isolierschaums der sich zwischen dem Innenrohr und dem Folienschlauch befindet nach aussen hin begrenzt, so dass der Isolierschaum die später in einem Korrugator erzeugte Wellung des Aussenrohrs nicht oder nur teilweise ausfüllen und dort aushärten kann. Entsprechend wird der Raum zwischen Innenrohr und Aussenrohr lediglich zu ca. 80% gefüllt. Dadurch wird die Biegbarkeit des fertigen Leitungsrohrs 18 erhöht. Mit "späterer Expansion" ist gemeint, dass das aufschäumbare Ausgangsmaterial vor dem Einbringen in den Folienschlauch 6 derart gebildet wird, dass es im Wesentlichen erst beim Austritt des Halbzeugs aus dem Korrugator zu expandieren beginnt und dabei eine Schaumfront bildet.

Das Halbzeug bestehend aus Innenrohr, Folienschlauch und dazwischen aufschäumbarem Material wird in ein Schutzrohr 9 eingeführt, das hauptsächlich dazu dient, das Halbzeug vor der im darauf folgenden Schritt auftretenden erhöhten Temperatur zu schützen, was auch bekannt ist. Es wird angemerkt, dass das Schutzrohr 9 durch den nachfolgend beschriebenen Extruder und bis in den später beschriebenen Korrugator hineinragt.

Im nächsten Herstellungsschritt wird auf das Halbzeug mittels eines Extruders mit einem Extrusionskopf 10 das Aussenrohr 1 aus Kunststoff aufextrudiert. Beim Extrusionskopf handelt es sich bevorzugt um einen Extruderumlenkkopf 10. Der Herstellungsschritt der Extrusion des Aussenrohrs 1 ist bekannt und wird nicht näher erläutert.

Nun folgt in der Herstellungsabfolge des Leitungsrohrs 18 nach dem Extrusionsschritt die Korrugation des Aussenrohrs 1 mittels eines Korrugators 11. Dabei wird mittels Formbacken eine Tiefenwellung in das Aussenrohr eingebracht. Diese Korrugation ist bekannt und kann normalerweise auf verschiedenen Weisen erfolgen, z.B. durch ein Einpressen der Wellform in das Aussenrohr oder durch Vakuumziehen des noch aufgrund der Prozesswärme sehr weichen und damit verformbaren Aussenrohrs nach aussen in entsprechende Formen. Für dünne Rohre ist es auch möglich Druckluft von innen zum Aussenrohr hin zu blasen, so dass das Aussenrohr nach aussen auf entsprechende gewellte Formbacken gepresst wird. Für die vorliegende Anwendung kommen nur die zweite und die dritte Alternative zur Anwendung, da der Isolierschaum zu diesem Zeitpunkt noch nicht expandiert ist. Für die erste Alternative, bei der von aussen die Formbacken eine Kraft nach innen ausüben, ist bei diesem Verfahren kein Gegendruck vom Isolierschaum vorhanden, so dass eine Wellung nicht oder nur unzureichend eingebracht werden könnte.

Das Schutzrohr 9 endet bevorzugt etwa 50 cm nach dem Punkt, an welchem sich die Formbacken des Korrugators schliessen. Das Schutzrohr 9 muss bis zu dem Punkt an welchem das Vakuum wirkt eine Trennung zwischen dem Aussenrohr 1 und dem Folienschlauch 6 vornehmen. Endet das Schutzrohr zu früh, dann zieht das Vakuum nicht nur das Aussenrohr, sondern auch noch das aufschäumbare Material an, was vermieden werden muss.

Beim Austritt aus dem Korrugator 11 umfasst das Halbzeug also das Innenrohr 2, umgeben vom Folienschlauch 6 und vom korrugierten Aussenrohr 1. An dieser Stelle fängt das aufschäumbare Material an zu schäumen, so dass vorzugsweise direkt beim Eintritt in eine nachfolgende Positionierungsvorrichtung 12 eine Schaumfront gebildet ist. Es ist aber auch möglich, dass die Schaumfront etwas später gebildet wird.

Das Halbzeug tritt nun in die Positionierungsvorrichtung 12 ein, mittels welcher die Position des Aussenrohrs zum Innenrohr angepasst wird. Dabei wird das Aussenrohr derart verschoben, dass seine Längsachse in einer bestimmungsgemässen Position bezogen auf die Längsachse des Innenrohrs angeordnet ist. Selbstverständlich erfolgt eine Verschiebung des Aussenrohrs in der y-Richtung und/oder z-Richtung nur dann, wenn eine Abweichung von der bestimmungsgemässen Position festgestellt worden ist.

Diese Prüfung der Position des Aussenrohrs wird mittels einer in Herstellungsrichtung x nach der Positionierungsvorrichtung angeordneten Detektionsvorrichtung 13 durchgeführt. Eine solche Detektionsvorrichtung ist z.B. eine Röntgenstrahleinrichtung 13 die aus EP0897788 bekannt ist. Mit deren Hilfe wird das Aussenrohr 1 kontinuierlich auf eine exakt zentrische Lage zum Innenrohr 2 überprüft, wenn es sich um ein einziges Innenrohr handelt. Mit anderen Worten ist die bestimmungsgemässe Position dadurch gegeben, dass die Längsachsen des Aussenrohrs und des Innenrohrs zusammenfallen. Bei der Herstellung von wärmeisolierten Leitungsrohren mit mehr als einem Innenrohr wird die Anpassung der Position des Aussenrohrs dann durchgeführt, wenn die Längsachse des Aussenrohrs und ein geometrischer Schwerpunkt der Innenrohre unter Berücksichtigung der festgelegten Positionstoleranzen nicht in einer bestimmungsgemässen Relation zueinander stehen. Dabei ist es in diesem Fall bevorzugt wenn die Innenrohre schon nach der Bremsraupe 5 starr miteinander gekoppelt werden um Positionsabweichungen der Innenrohre bei den weiteren Herstellungsschritten zu vermeiden. Dazu werden Abstandhalterelemente, bevorzugt Clips 1b **(****Fig. 4****),** verwendet, welche in bestimmten Abständen manuell oder automatisch auf die Innenohre eingeschnappt werden. Dazu sind die Clips bis zu einem gewissen Grad flexibel, so dass sie auseinander gezogen werden können um den Durchmesser des jeweiligen Innerohrs zu überwinden. Die Röntgenstrahleinrichtung 13 umfasst weiter oder ist verbindbar mit einer Kontrolleinheit der Herstellungsanlage. Dabei wird ein Querschnitt des Halbzeugs auf einem Display visualisiert und allfällige Abweichungen von der bestimmungsgemässen Position werden angezeigt. Optional kann auch ein Audiosignal generiert werden, wenn die Abweichung ausserhalb der zulässigen Toleranzen gerät. Es ist bevorzugt wenn der Abstand der Röntgenstrahleinrichtung 13 von der Positionierungsvorrichtung änderbar ist um z.B. je nach Durchmesser des herzustellenden Leitungsrohrs eine möglichst repräsentative Detektion, z.B. im Hinblick auf verschiedene Durchhängeverhalten des Halbzeugs nach der Positionierungsvorrichtung, zu erreichen. Da es sich um ein kontinuierliches Herstellungsverfahren handelt ist aufgrund der Position der Röntgenstrahleinrichtung 13 nach der Positionierungsvorrichtung nach dem Anfahren der Herstellungsanlage ein gewisser Durchlauf nötig, bis die Rückkopplung effektiv zwischen der ermittelten Position des Aussenrohrs und der Anpassung dieser Position mittels der Positionierungsvorrichtung innerhalb der zulässigen Toleranzen erfolgt. Die Röntgenstrahleinrichtung kann optional auch mit der Zentriervorrichtung 5a gekoppelt sein um auch die grobe Positionierung des Innenrohrs zu optimieren, so dass im Nachgang zu einer entsprechenden Justierung der Zentriervorrichtung die Positioniervorrichtung lediglich kleinere Abweichungen korrigieren muss.

In einem weiteren Schritt wird das Halbzeug, das nun mit Schaum gefüllt ist, in der bestimmungsgemässen Position mittels einer Fixierungsvorrichtung 23, die vor der Röntgenstrahleinrichtung 13 angeordnet ist, fixiert, um eine erneute Abweichung der Position von der bestimmungsgemässen Position wegen Durchhängen des Aussenrohrs zu vermeiden. Ein solches Durchhängen könnte passieren da der Isolierschaum zu diesem Zeitpunkt nicht oder nicht genügend ausgehärtet sein könnte, um dem Durchhängen entgegenzuwirken. Die Position der Fixierungsvorrichtung kann auch je nach zu fertigendem Leitungsrohr in x-Richtung angepasst werden.

Nach der Röntgenstrahleinrichtung 13 wird das Halbzeug bevorzugt durch eine Kühlvorrichtung 14 transportiert, welche die Kühlung des Aussenrohres sowie des Isolierschaums beschleunigt. Nach der Kühlvorrichtung, welche bevorzugt aber nicht darauf beschränkt mit kaltem Wasser funktioniert, ist das wärmeisolierte Leitungsrohr 18 fertig.

Wenn eine Kühlvorrichtung vorgesehen ist, ist nach dieser, sonst nach der Röntgenstrahleinrichtung 13 eine Zugraupe 15 vorgesehen, welche in Zusammenspiel mit der eingangs erwähnten Bremsraupe 5 für eine möglichst gerade und straffe Ausrichtung des herzustellenden Leitungsrohrs vom Eingang bis zum Ausgang der Herstellungsanlage H sorgt. Die Bremsraupe wirkt dabei auf das der Herstellungsanlage zugeführte Innenrohr mechanisch ein und die Zugraupe wirkt auf das die Herstellungsanlage verlassende fertige Leitungsrohr mechanisch ein. Das Zusammenwirken der Bremsraupe mit der Zugraupe erfolgt derart, dass die Raupen das Innenrohr in Herstellungsrichtung x mit einer bestimmungsgemässen maximalen Durchhängetoleranz entlang der Stationen der Herstellungsanlage spannen. Zur Ausübung der mechanischen Einwirkung weisen die Bremsraupe und die Zugraupe jeweils Führungselemente auf, welche in Kontakt mit dem Innenrohr bzw. dem fertigen Leitungsrohr sind und derart ausgestaltet sind, dass sie zur Einstellung einer bestimmungsgemässen Spannung des Innenrohrs jeweils eine Gleitreibung variieren.

Schliesslich wird das fertige Leitungsrohr mittels einer Aufwickelvorrichtung 16 auf eine Trommel 17 aufgewickelt. Alternativ kann das fertige Leitungsrohr stangenweise abgelängt werden.

Nun wird die Positionierungsvorrichtung 12 im Detail im Kontext von **Fig. 2** erläutert. Fig. 2 zeigt schematisch eine Detailansicht des Abschnitts A aus Fig. 1. Es wird an dieser Stelle ausdrücklich angemerkt, dass beim Schritt des Anpassens der Position des Aussenrohrs mittels der Positionierungsvorrichtung direkt ausschliesslich auf das Aussenrohr eingewirkt wird. Eine allfällige indirekte Einwirkung auf das Innenrohr über den expandierenden Isolierschaum wird vernachlässigt.

Die Positionierungsvorrichtung 12 umfasst eine unmittelbar am Ausgang des Korrugators 11 angeordnete Führungsschiene 21, welche das Halbzeug horizontal quer zur Herstellungsrichtung x führt bzw. in Position hält. Quer zur Herstellungsrichtung x, also in +/- y-Richtung bedeutet, dass mittels der Führungsschiene vermieden wird, dass sich das Halbzeug übermässig in diese Richtung verschiebt. Die Führungsschiene 21 kann auch eine eigenständige Vorrichtung der Herstellungsvorrichtung oder Teil des Korrugators sein. Die Führungsschiene ist vorzugsweise als nach oben offenes U-Profil ausgestaltet, auf welchem das Halbzeug aufliegt. Vorzugsweise kann die seitliche Breite des U-Profils an den Durchmesser des Halbzeugs angepasst werden. Es hat sich gezeigt, dass bei der Herstellung des Aussenrohrs aus LD-PE-haltigem oder LLD-PE-haltigem Kunststoff aufgrund der höheren Flexibilität des Aussenrohrs das Halbzeug schwieriger in Position zu halten ist, d.h. das Halbzeug kann sich leichter quer zur Herstellungsrichtung, also in y-Richtung verschieben, was unerwünscht ist. Die Führungsschiene 21 kompensiert dieses Verhalten auf effektive Weise indem sie aufgrund ihrer Form das Halbzeug in der gewünschten Position in y-Richtung hält.

Wie bereits erwähnt wird das aufschäumbare Ausgangsmaterial vor dem Einbringen in den Folienschlauch 6 derart gebildet, dass beim Eintritt des Halbzeugs in die Positionierungsvorrichtung die Schaumfront bereits gebildet ist. Die Bildung der Schaumfront kann entweder bei Erreichen der Führungsschiene 21 oder erst beim Eintritt in einem weiteren Element der Positionierungsvorrichtung einsetzen. Der Vorteil, dass der Schaum sich erst an dieser Stelle zu expandieren beginnt ist, dass er noch nicht zu viskos ist. Mit steigender Viskosität bis zur Aushärtung des Isolierschaums bewirkt die Einwirkung der nachfolgend beschriebenen Verschiebungsvorrichtung auf das Aussenrohr eine erhebliche indirekte Einwirkung auf das Innenrohr selbst, so dass sich dieses folglich auch verschieben würde. Bei der anfänglich geringen Viskosität des Isolierschaums in dieser Phase bewirkt eine Verschiebung der Position des Aussenrohrs noch keine oder nur eine vernachlässigbare Verschiebung des Innenrohrs, so dass eine Ausrichtung des Aussenrohrs zum Innenrohr mit der geforderten Präzision möglich ist.

Dieses Element der Positionierungsvorrichtung ist eine Verschiebungsvorrichtung 22 zum Anpassen der Position des Aussenrohrs in y-Richtung und/oder in z-Richtung. Die Verschiebungsvorrichtung ist in Herstellungsrichtung x nach der Führungsschiene in einem ersten änderbaren Abstand von der Führungsschiene 21 angeordnet. Mit Vorteil bewirkt der erste änderbare Abstand eine erhöhte Flexibilität bei der Minimierung des Versatzes in y-Richtung für verschiedene Durchmesser des Halbzeugs. Je weiter die Verschiebungsvorrichtung von der Führungsschiene entfernt ist, desto mehr würde sich der positionskorrigierende Effekt der Führungsschiene verschlechtern, je nach Durchmesser des Halbzeugs. Es hat sich gezeigt, dass ein erster Abstand von ca. 150 mm für Aussenrohrdurchmesser von 70 mm bis 150 mm vorteilhaft ist. Auch wenn ein erneuter Versatz in y-Richtung nachfolgend in der entsprechenden Verschiebungsvorrichtung kompensiert werden kann, ist es wünschenswert, dass ein solcher erneuter Versatz möglichst gering gehalten wird.

Die Verschiebungsvorrichtung kann in einer ersten Ausführungsform die in Fig. 2 dargestellt ist eine erste Verschiebungseinheit 22a zum Anpassen der Position des Aussenrohrs in y-Richtung und eine zweite Verschiebungseinheit 22b zum Anpassen der Position des Aussenrohrs in z-Richtung umfassen. Die erste Verschiebungseinheit und die zweite Verschiebungseinheit sind unterschiedlich voneinander und in einem zweiten änderbaren Abstand voneinander in Herstellungsrichtung x nacheinander angeordnet. Dabei ist die Reihenfolge beliebig aber aufgrund des oben genannten Versatzes in y-Richtung ist die Anordnung der Verschiebungseinheit in y-Richtung vor der Verschiebungseinheit in z-Richtung bevorzugt.

Alternativ kann die Verschiebungsvorrichtung eine einzige Verschiebungseinheit zum Anpassen der Position des Aussenrohrs in y-Richtung und in z-Richtung umfassen.

Unabhängig von den obigen Alternativen umfasst die Verschiebungsvorrichtung mindestens zwei V-Rinnen oder Rollen jeweils für die y-Richtung und für die z-Richtung. Diese V-Rinnen oder Rollen sind für jede der beiden Richtungen miteinander verbunden und gegenüberliegend auf jeweils einer Seite des Aussenrohrs angeordnet, so dass das Aussenrohr möglichst ohne Spiel festgehalten wird. Dabei sind diese Paare aus V-Rinnen bzw. Rollenpaare derart ausgestaltet, dass sie Aussenrohre mit verschiedenen Durchmesser halten können, mit anderen Worten ist der Abstand zwischen den V-Rinnen oder Rollen änderbar. Sie sind derart ausgerichtet, dass sie zum Anpassen der Position des Aussenrohrs dieses in der jeweiligen anzupassenden y-Richtung und y-Gegenrichtung bzw. z-Richtung und z-Gegenrichtung verschieben.

Die Anpassung der Position des Aussenrohrs ist bei der ersten Alternative mittels mindestens eines Antriebs nacheinander in y-Richtung und z-Richtung oder umgekehrt einzeln für jede Richtung oder bei der zweiten Alternative kombiniert als gleichzeitige Verschiebung in y-Richtung und in z-Richtung durchführbar.

Beim Schritt der Anpassung der Position des Aussenrohrs mittels der Positionierungsvorrichtung wird mindestens einer der zwei nachfolgenden Unterschritte durchgeführt. Sofern eine bestimmungsgemässe Position in der y-Richtung nicht bereits besteht, wird die Position des Aussenrohrs in der y-Richtung angepasst, indem das Aussenrohr mittels der Verschiebungsvorrichtung bzw. der entsprechenden Verschiebungseinheit eine entsprechende Verschiebung bis zum Erreichen der bestimmungsgemässen Position in y-Richtung erfährt. Sofern eine bestimmungsgemässe Position in der z-Richtung nicht bereits besteht, wird die Position des Aussenrohrs in der z-Richtung angepasst, indem das Aussenrohr mittels der Verschiebungsvorrichtung bzw. der entsprechenden Verschiebungseinheit eine entsprechende Verschiebung bis zum Erreichen der bestimmungsgemässen Position in z-Richtung erfährt. Die Reihenfolge der Schritte ist wie erwähnt beliebig ist oder die Schritte können gleichzeitig durchgeführt werden. Die Anpassung der Position des Aussenrohrs wird dann getriggert, wenn beim Detektieren der Position der Längsachse des Aussenrohrs bezogen auf die Position der Längsachse des mindestens einen Innenrohrs festgelegte Positionstoleranzen überschritten werden.

In Ausführungsformen wird beim Anpassen der Position des Aussenrohrs in z-Richtung diese Position mit einem vertikalen Versatz von der bestimmungsgemässen Position in z-Richtung eingestellt. Mit dem Versatz wird eine Abweichung der Position des Aussenrohrs von der bestimmungsgemässen Position des Aussenrohrs in z-Richtung aufgrund von mindestens einem der nachfolgenden Faktoren: Gewicht des Innenrohrs, Viskosität des Isolierschaums, Aushärtungsgrad des Isolierschaums, Temperatur des Innenrohrs, Material des Innenrohrs, Temperatur des Aussenrohrs kompensiert. Dies wird am Beispiel des Gewichts des Innenrohrs erläutert. Im idealen Fall würde das Innenrohr nicht durchhängen, was aber offensichtlich nicht der Fall sein kann, da das Innenrohr je nach Beschaffenheit immer mehr oder weniger durchhängt. Dadurch kann sich seine Längsachse im weiteren Verlauf, z.B. abhängig davon wie viskos der Isolierschaum bereits ist und entsprechend das Innenrohr "stützt" verschieben und die vorgängige Positionierung des Aussenrohrs wäre fehlerhaft da die Längsachse des Aussenrohrs nicht mehr mit der Längsachse des Innenrohrs zusammenfällt. Dieser Versatz kann mit der obigen Massnahme kompensiert werden, wobei die oben aufgezählten Faktoren einzeln oder in beliebiger Kombination kumulativ berücksichtigt werden können.

Die Positionierungsvorrichtung weist bevorzugt zum Einstellen einer Referenzposition der Verschiebungsvorrichtung nicht gezeigte Justierungselemente auf, welche manuell oder automatisch mittels entsprechender Stellmotoren bedienbar sind. Damit wird bei Prozessbeginn die Verschiebungsvorrichtung bzw. die V-Rinne oder Rollen derart eingestellt, dass eine imaginäre, zu erwartende bestimmungsgemässe Längsachse des Halbzeugs innerhalb der V-Rinne oder Rollen zentriert ist und die V-Rinne bzw. Rollen auf den korrekten Aussenrohrdurchmesser eingestellt sind. Mit Vorteil ist dadurch die prozessbegleitende anschliessende kontinuierliche Anpassung der Position des Aussenrohrs auf einen minimalen Versatz der anpassenden Elemente der Verschiebungsvorrichtung reduziert.

Weiter umfasst die Positionierungsvorrichtung 12 in Herstellungsrichtung x in einem dritten änderbaren Abstand nach der Verschiebungsvorrichtung 22 bevorzugt eine Fixierungsvorrichtung 23 zum Halten des Aussenrohrs in der angepassten (bestimmungsgemässen) Position. Die Fixierungsvorrichtung kann aus einem Fixierungselement oder aus mindestens zwei nacheinander angeordneten Fixierungselementen 23a, 23b gebildet sein. Die zweite in der Figur gezeigte Alternative ist als Zweipunktfixierung gegenüber einer Einpunktfixierung vorzuziehen. Die Fixierungsvorrichtung sorgt dafür, dass die eingestellte bestimmungsgemässe Position des Aussenrohrs zum Innenrohr nach dem Austreten aus der Verschiebungsvorrichtung nicht verfälscht wird. Dies könnte passieren da der Isolierschaum zu diesem Zeitpunkt eventuell noch nicht komplett ausgehärtet und das Halbzeug noch relativ flexibel ist. Ein weiterer Faktor ist die Flexibilität des LLD-PE umfassenden Aussenrohrs.

Der erwähnte zweite und dritte Abstand können wie beim bereits beschriebenen ersten Abstand mit Vorteil dazu genutzt werden, je nach Halbzeug den Herstellungsprozess im Hinblick auf Präzision der Anpassung der Position des Aussenrohrs zu optimieren.

In Ausführungsformen wird die Position der Schaumfront in Herstellungsrichtung x optisch detektiert indem das Aussenrohr zunächst transparent belassen und erst nach der Detektierung der Position der Schaumfront mittels Pigmenten eingefärbt werden kann. Die Pigmentierung erfolgt vorzugsweise durch Zugabe eines Farbmasterbatch im Extruder so, dass die Einfärbung mit einer Verzögerung erst nach der Detektion der Schaumfront sichtbar wird. Mit Vorteil kann dadurch auf einfache Weise der Beginn bzw. das Fortschreiten des Schäumungsprozesses kontinuierlich während der Herstellung überprüft werden.

**Fig. 3** zeigt schematisch im Querschnitt entlang der Linie B aus Fig. 2 ein mit dem erfindungsgemässen Verfahren und der erfindungsgemässen Herstellungsanlage gefertigtes Leitungsrohr 18 mit einem einzigen Innenrohr 2 durch welches das zu isolierende Medium fliesst, konzentrisch dazu das Aussenrohr 1 (wobei die Wellung des Aussenrohrs der Einfachheit halber nicht eingezeichnet ist) und dazwischen der ausgehärtete Isolierschaum 1a.

**Fig. 4** zeigt schematisch im Querschnitt entlang der Linie B aus Fig. 2 ein mit dem erfindungsgemässen Verfahren und der erfindungsgemässen Herstellungsanlage gefertigtes Leitungsrohr 18 mit zwei Innenrohren 2a, 2b, durch welche das oder die zu isolierenden Medien fliessen, konzentrisch dazu das Aussenrohr 1 (wobei die Wellung des Aussenrohrs der Einfachheit halber nicht eingezeichnet ist) und dazwischen der ausgehärtete Isolierschaum 1a. Dabei ist auch das bereits beschriebene und als verlorenes Element im fertigen Leitungsrohr verbleibende Abstandhalterelement 1b, das vorzugsweise aus Kunststoff ist, illustriert.

Die vorliegende Erfindung löst das Problem, dass bei flexibleren Leitungsrohren aus LLD-PE (Linear Low Density Polyethylene) oder LLD-PE-haltigem Kunststoff aufgrund eben dieser Flexibilität eine exakte Zentrierung des Aussenrohrs und des Innenrohrs zueinander mit den bisher zum Einsatz kommenden Verfahren nicht mit der geforderten Genauigkeit erreicht werden konnte. Dadurch, dass nun nicht mehr das Innenrohr im bereits bestehenden Aussenrohr zentriert wird sondern umgekehrt nur auf das Aussenrohr eingewirkt wird, ist es möglich die erhöhte Flexibilität des Aussenrohrs diesbezüglich zu kompensieren. Es wird angemerkt, dass die erwähnte Aushärtung des Isolierschaums nicht bedeutet, dass das Leitungsrohr vollkommen steif ist. Vielmehr ist die erhöhte Flexibilität des Leitungsrohrs als im Rahmen der geltenden charakterisierenden Werte für solche wärmeisolierten Leitungsrohre als erhöht anzusehen.

Ein weiterer Vorteil der Erfindung ist, dass die Positionierungsgenauigkeit im laufenden Verfahren leichter erhöht werden kann, da die Anpassung der Position im Endbereich des Herstellungsprozesses stattfindet und nicht am Anfang. Dies ist dadurch bewirkt, dass der Isolierschaum erst kurz vor der Positionierungsvorrichtung aufschäumt und zur Zeit der Anpassung der Position noch nicht ausgehärtet ist. Im Gegensatz dazu hat die bekannte Anpassung der Position am Anfang des Herstellungsprozesses mit Aufschäumung am Anfang des Prozesses den Nachteil, dass nachfolgende Herstellungsschritte, insbesondere die Korrugation bei der erhöhte Kräfte auf das Halbzeug wirken können, die bereits erfolgte Positionierung verfälschen können.

Obwohl bevorzugte Ausführungsformen der Erfindung beschrieben worden sind wird darauf hingewiesen, dass die Erfindung auf anderen Weisen im Rahmen der nachfolgenden Ansprüche realisiert werden kann. Dabei beziehen sich in der Beschreibung verwendete Begriffe wie "bevorzugt", "insbesondere", "vorteilhaft", etc. nur auf optionale und beispielhafte Ausführungsformen.

## Patentansprüche

1. Verfahren zur kontinuierlichen Herstellung eines wärmeisolierten Leitungsrohrs (18) mittels einer Herstellungsanlage (H), wobei das wärmeisolierte Leitungsrohr (18) im fertigen Zustand ein Aussenrohr (1) aus LLD-PE oder LLD-PE-haltigem Kunststoff, mindestens ein im Aussenrohr (1) angeordnetes Innenrohr (2) und einen ausgehärteten Isolierschaum (1a) zwischen dem Innenrohr (2) und dem Aussenrohr (1) umfasst, wobei die Herstellung des wärmeisolierten Leitungsrohrs (18) in einer im Wesentlichen horizontalen Herstellungsrichtung x durch verschiedene Stationen der Herstellungsanlage (H) durchgeführt wird, wobei das Verfahren die Schritte umfasst:
a) Bilden eines Folienschlauchs (6) um das mindestens eine Innenrohr (1) und Einbringen eines aufschäumbaren Ausgangsmaterials in den Folienschlauch (6), welches Ausgangsmaterial zu einem Isolierschaum expandiert und der Isolierschaum aushärtet, wobei der ausgehärtete Isolierschaum (1a) im fertigen Leitungsrohr (18) mindestens einen Teil des Raums zwischen dem Innenrohr (2) und dem Aussenrohr (1) ausfüllt,
b) Hindurchführen des Innenrohrs (2) mit dem Folienschlauch (6) und dem aufschäumbaren Ausgangsmaterial durch einen Extrusionskopf (10), mittels welchem das Aussenrohr (1) um das Innenrohr (2) mit dem Folienschlauch (6) extrudiert wird, so dass ein Halbzeug entsteht,
c) Bilden einer Wellung des Aussenrohrs in einem Korrugator (11) um ein gewelltes Aussenrohrs (1) zu erzeugen,
wobei das aufschäumbare Ausgangsmaterial vor dem Einbringen in den Folienschlauch (6) derart gebildet wird, dass es im Wesentlichen erst beim Austritt des Halbzeugs aus dem Korrugator (11) zu expandieren beginnt und dabei eine Schaumfront bildet,
**gekennzeichnet durch** die Schritte
d) Detektieren einer Position der Längsachse des gewellten Aussenrohrs (11) bezogen auf die Position der Längsachse des mindestens einen Innenrohrs (2) mittels einer Detektionsvorrichtung (13),
e) im Falle, dass beim Schritt d) die Längsachsen nicht in einer bestimmungsgemässen Position zueinander angeordnet sind, Anpassen der Position des gewellten Aussenrohrs (1) bezogen auf das Innenrohr (2) mittels einer Positionierungsvorrichtung (12), bis seine Längsachse in der bestimmungsgemässen Position zur Längsachse des Innenrohrs (2) angeordnet ist,
f) Fixieren des Aussenrohrs (1) in der bestimmungsgemässen Position.

2. Verfahren nach Anspruch 1, wobei beim Schritt des Anpassens der Position des Aussenrohrs (1) mittels der Positionierungsvorrichtung (12) ausschliesslich auf das Aussenrohr (1) eingewirkt wird.

3. Verfahren nach Anspruch 1 oder 2, wobei das Innenrohr (2) in der Herstellungsanlage (H) in der Herstellungsrichtung x mittels einer Bremsraupe (5) in Zusammenwirkung mit einer Zugraupe (15) gespannt gehalten wird.

4. Verfahren nach einem der vorangehenden Ansprüche, wobei das aufschäumbare Ausgangsmaterial vor dem Einbringen in den Folienschlauch (6) derart gebildet wird, dass sich die Schaumfront erst beim Eintritt des Halbzeugs in die Positionierungsvorrichtung (12) anfängt zu bilden oder bereits gebildet hat.

5. Verfahren nach einem der vorangehenden Ansprüche, wobei beim Schritt des Anpassens der Position des Aussenrohrs (1) mittels der Positionierungsvorrichtung (12) mindestens einer der zwei Unterschritte durchgeführt wird:
e1) Anpassen der Position des Aussenrohrs (1) in einer zur Herstellungsrichtung x horizontal senkrechten y-Richtung, sofern eine bestimmungsgemässe Position in der y-Richtung nicht bereits besteht, indem mittels mindestens einer ersten Verschiebungseinheit (22a) eine entsprechende Verschiebung des Aussenrohrs (1) bis zum Erreichen der bestimmungsgemässen Position in y-Richtung durchgeführt wird, und/oder
e2) Anpassen der Position des Aussenrohrs (1) in einer zur Herstellungsrichtung x vertikal senkrechten z-Richtung, sofern eine bestimmungsgemässe Position in der z-Richtung nicht bereits besteht, indem mittels mindestens einer zweiten Verschiebungseinheit (22b) eine entsprechende Verschiebung des Aussenrohrs (1) bis zum Erreichen der bestimmungsgemässen Position in z-Richtung durchgeführt wird,
wobei eine Reihenfolge der Schritte e1 und e2 beliebig ist oder die Schritte e1 und e2 gleichzeitig durchgeführt werden.

6. Verfahren nach Anspruch 5, wobei beim Anpassen der Position des Aussenrohrs (1) in z-Richtung diese Position mit einen vertikalen Versatz von der bestimmungsgemässen Position in z-Richtung eingestellt wird, wobei mit dem Versatz eine Abweichung der Position des Aussenrohrs (1) von der bestimmungsgemässen Position des Aussenrohrs (1) in z-Richtung aufgrund von mindestens einem der nachfolgenden Faktoren: Gewicht des Innenrohrs, Viskosität des Isolierschaums, Aushärtungsgrad des Isolierschaums, Temperatur des Innenrohrs, Material des Innenrohrs, Temperatur des Aussenrohrs kompensiert wird.

7. Verfahren nach einem der vorangehenden Ansprüche, wobei das Innenrohr (2) vor dem Eintritt des Aussenrohrs (1) mit dem Innenrohr (2) in den Korrugator (11) mittels einer Zentriervorrichtung (5a) mit einer vorbestimmten Toleranz im Aussenrohr (1) grob zentriert wird.

8. Verfahren nach einem der vorangehenden Ansprüche, wobei das Halbzeug unmittelbar nach dem Austritt aus dem Korrugator (11), insbesondere kontinuierlich, mittels einer Führungsschiene (21) horizontal quer zur Herstellungsrichtung x geführt bzw. in Position gehalten wird.

9. Verfahren nach einem der vorangehenden Ansprüche, wobei das Anpassen der Position des Aussenrohrs (1) dann getriggert wird, wenn beim Detektieren der Position der Längsachse des Aussenrohrs (1) bezogen auf die Position der Längsachse des mindestens einen Innenrohrs (2) festgelegte Positionstoleranzen der Position der Längsachse des Aussenrohrs (1) bezogen auf die Position der Längsachse des Innenrohrs (2) überschritten werden.

10. Verfahren nach Anspruch 9,
wobei bei der Herstellung von wärmeisolierten Leitungsrohren (18) mit genau einem Innenrohr (2) das Anpassen der Position des Aussenrohrs (1) dann durchgeführt wird, wenn die Längsachsen des Aussenrohr (1) und des Innenrohrs (2) unter Berücksichtigung der festgelegten Positionstoleranzen nicht identisch sind, oder
wobei bei der Herstellung von wärmeisolierten Leitungsrohren (18) mit mehr als einem Innenrohr (2a, 2b) das Anpassen der Position des Aussenrohrs (1) dann durchgeführt wird, wenn die Längsachse des Aussenrohrs (1) und ein geometrischer Schwerpunkt der, insbesondere starr miteinander gekoppelten, Innenrohre (2a, 2b) unter Berücksichtigung der festgelegten Positionstoleranzen nicht in einer bestimmungsgemässen Relation zueinander stehen.

11. Verfahren nach einem der vorangehenden Ansprüche, wobei die Position der Schaumfront in Herstellungsrichtung x optisch detektiert wird indem das Aussenrohr (1) zunächst transparent belassen und erst nach der Detektierung der Position der Schaumfront mittels Pigmenten eingefärbt wird.

12. Verfahren nach einem der vorangehenden Ansprüche, wobei bei Vorliegen mehrerer Innenrohre (2a, 2b), diese vor dem Bilden des Folienschlauchs (6) mittels Abstandhalterelemente (1b) miteinander derart verbunden werden, dass sie bezogen aufeinander eine starre Konfiguration aufweisen, wobei Abstandhalterelemente (1b) in einem vordefinierten Abstand entlang der Innenrohre (2a, 2b) kontinuierlich angebracht werden, insbesondere um die Innenrohre (2a, 2b) als Clip eingeschnappt werden.

13. Herstellungsanlage (H) zur Durchführung des Verfahrens nach einem der vorangehenden Ansprüche, umfassend in Herstellungsrichtung x nacheinander gesehen folgende Stationen:
eine Isolierschaumvorbereitungsvorrichtung umfassend eine Formschulter (7) zum kontinuierlichen Umwickeln des Innenrohrs (2) mit dem Folienschlauch (6) und einen Einspritzkopf (8) zum Einbringen des aufschäumbaren Ausgangsmaterials zwischen dem Folienschlauch (6) und dem Innenrohr (2),
einen Extrusionskopf (10) zum Extrudieren des Aussenrohrs (1) um das Innenrohr (2) mit dem Folienschlauch (6) und dem aufschäumbaren Ausgangsmaterial,
einen Korrugator (11) zur Erzeugung einer Wellung im Aussenrohr (11),
ein Schutzrohr (9) zum Schutz des Innenrohrs (2) mit dem Folienschlauch (6) und dem aufschäumbaren Ausgangsmaterial während der Extrusion und/oder Korrugation des Aussenrohrs (1),
eine Positionierungsvorrichtung (12) zum Anpassen der Position des Aussenrohrs (1) bezogen auf das Innenrohr (2),
eine Detektionsvorrichtung (13) zum Detektieren einer Position der Längsachse des Aussenrohrs (1) bezogen auf die Position der Längsachse des mindestens einen Innenrohrs (2), und
eine Kühlvorrichtung (14) zum Kühlen des fertigen Leitungsrohrs (18).

14. Herstellungsanlage nach Anspruch 13, wobei die Positionierungsvorrichtung (12) in Herstellungsrichtung x nach dem Korrugator (11) angeordnet ist.

15. Herstellungsanlage nach einem der Ansprüche 13 oder 14, wobei die Positionierungsvorrichtung (12) eine unmittelbar am Ausgang des Korrugators (11) angeordnete Führungsschiene (21) umfasst, welche das Halbzeug horizontal quer zur Herstellungsrichtung x führt bzw. in Position hält.

16. Herstellungsanlage nach Anspruch 13 oder 14 und Anspruch 15, wobei die Positionierungsvorrichtung (12) weiter eine Verschiebungsvorrichtung (22; 22a, 22b) zum Anpassen der Position des Aussenrohrs (1) in y-Richtung und/oder in z-Richtung umfasst, wobei die Verschiebungsvorrichtung (22; 22a, 22b) in Herstellungsrichtung x nach der Führungsschiene (21) in einem ersten änderbaren Abstand von der Führungsschiene (21) angeordnet ist.

17. Herstellungsanlage nach Anspruch 16, wobei die Verschiebungsvorrichtung (22; 22a, 22b) entweder
eine erste Verschiebungseinheit (22a) zum Anpassen der Position des Aussenrohrs (1) in y-Richtung und eine zweite Verschiebungseinheit (22b) zum Anpassen der Position des Aussenrohrs (1) in z-Richtung umfasst, wobei die erste Verschiebungseinheit (22a) und die zweite Verschiebungseinheit (22b) unterschiedlich voneinander sind und in einem zweiten änderbaren Abstand voneinander in Herstellungsrichtung x in beliebiger Reihenfolge nacheinander angeordnet sind, oder
eine einzige Verschiebungseinheit (22) zum Anpassen der Position des Aussenrohrs (1) in y-Richtung und in z-Richtung umfasst,
insbesondere wobei
die Verschiebungsvorrichtung (22; 22a, 22b) mindestens zwei V-Rinne oder Rollen jeweils für die y-Richtung und für die z-Richtung umfasst, welche V-Rinne oder Rollen für jede der beiden Richtungen miteinander verbunden sind und gegenüberliegend auf jeweils einer Seite des Aussenrohrs (1) angeordnet und derart ausgerichtet sind, dass sie zum Anpassen der Position des Aussenrohrs (1) dieses in der jeweiligen anzupassenden y-Richtung und y-Gegenrichtung bzw. z-Richtung und z-Gegenrichtung verschieben, und
das Anpassen der Position des Aussenrohrs (1) mittels mindestens eines Antriebs nacheinander in y-Richtung und z-Richtung oder umgekehrt einzeln für jede Richtung oder kombiniert als gleichzeitige Verschiebung in y-Richtung und in z-Richtung durchführbar ist.

18. Herstellungsanlage nach einem der Ansprüche 13 bis 17 und Anspruch 16, wobei die Positionierungsvorrichtung (22; 22a, 22b) zum Einstellen einer Referenzposition der Verschiebungsvorrichtung (22; 22a, 22b) weiter Justierungselemente aufweist, welche Justierungselemente manuell oder automatisch mittels entsprechender Stellmotoren bedienbar sind.

19. Herstellungsanlage nach einem der Ansprüche 13 bis 18 und Anspruch 16, wobei die Positionierungsvorrichtung (12) in Herstellungsrichtung x in einem dritten änderbaren Abstand nach der Verschiebungsvorrichtung (22; 22a, 22b) eine Fixierungsvorrichtung (23; 23a, 23b) zum Halten des Aussenrohrs (1) in der angepassten Position umfasst, wobei die Fixierungsvorrichtung (23; 23a, 23b) aus einem Fixierungselement (23) oder aus mindestens zwei nacheinander angeordneten Fixierungselementen (23a, 23b) gebildet ist.

20. Herstellungsanlage nach einem der Ansprüche 13 bis 19, wobei zum Spannen des Innenrohrs (2) in Herstellungsrichtung x vor der Isolierschaumvorbereitungsvorrichtung eine Bremsraupe (5) und nach der Kühlvorrichtung (14) eine Zugraupe (15) vorgesehen sind, wobei die Bremsraupe (5) auf das der Herstellungsanlage (H) zugeführte Innenrohr (2) mechanisch einwirkt und die Zugraupe (15) auf das die Herstellungsanlage (H) verlassende fertige Leitungsrohr (18) mechanisch einwirkt, und die Bremsraupe (5) und die Zugraupe (15) derart zusammenwirken, dass sie das Innenrohr (2) in Herstellungsrichtung x mit einer bestimmungsgemässen maximalen Durchhängetoleranz entlang der Stationen der Herstellungsanlage (H) spannen, wobei zur Ausübung der mechanischen Einwirkung die Bremsraupe (5) und die Zugraupe (15) jeweils Führungselemente aufweisen, welche in Kontakt mit dem Innenrohr (2) bzw. dem fertigen Leitungsrohr (18) und derart ausgestaltet sind, dass sie zur Einstellung einer bestimmungsgemässen Spannung des Innenrohrs (2) jeweils eine Gleitreibung variieren.

21. Herstellungsanlage nach einem der Ansprüche 13 bis 19, wobei die Detektionsvorrichtung (13) eine Röntgenanlage umfasst, mittels welcher die Position der Längsachse des Aussenrohrs (1) bezogen auf die Position der Längsachse des mindestens einen Innenrohrs (2) messbar ist, weiter eine Displayeinrichtung umfasst, mittels welcher die entsprechenden Messergebnisse, insbesondere grafisch, ausgebbar sind.

## Claims

1. Method for the continuous production of a thermally insulated line pipe (18) by means of a production plant (H), wherein the thermally insulated line pipe (18) comprises, in the finished state, an outer pipe (1) made of LLD-PE or LLD-PE-containing plastic, at least one inner pipe (2) arranged in the outer pipe (1) and a hardened insulating foam (1a) between the inner pipe (2) and the outer pipe (1), wherein the production of the thermally insulated line pipe (18) is carried out in a substantially horizontal production direction x through various stations of the production plant (H), wherein the method comprises the steps of
a) forming a foil tube (6) around the at least one inner pipe (1) and introducing a foamable starting material into the foil tube (6), which starting material expands to form an insulating foam and the insulating foam hardens, wherein the hardened insulating foam (1a) fills at least part of the space between the inner pipe (2) and the outer pipe (1) in the finished line pipe (18),
b) passing the inner pipe (2) with the foil tube (6) and the foamable starting material through an extrusion head (10), by means of which the outer pipe (1) is extruded around the inner pipe (2) with the foil tube (6), so that a semi-finished product is formed,
c) forming a corrugation of the outer pipe in a corrugator (11) to produce a corrugated outer pipe (1),
wherein the foamable starting material is formed before being introduced into the foil tube (6) in such a way that it essentially only begins to expand when the semi-finished product emerges from the corrugator (11), thereby forming a foam front,
**characterized by** the steps of
d) detecting a position of the longitudinal axis of the corrugated outer pipe (11) relative to the position of the longitudinal axis of the at least one inner pipe (2) by means of a detection device (13),
e) in the event that in step d) the longitudinal axes are not arranged in an intended position relative to one another, adjusting the position of the corrugated outer pipe (1) relative to the inner pipe (2) by means of a positioning device (12) until its longitudinal axis is arranged in the intended position relative to the longitudinal axis of the inner pipe (2),
f) fix the outer pipe (1) in the intended position.

2. Method according to claim 1, wherein in the step of adjusting the position of the outer pipe (1) by means of the positioning device (12), action is exerted exclusively on the outer pipe (1).

3. Method according to claim 1 or 2, wherein the inner pipe (2) is held clamped in the manufacturing plant (H) in the manufacturing direction x by means of a brake bead (5) in cooperation with a traction bead (15).

4. Method according to one of the preceding claims, wherein the foamable starting material is formed before being introduced into the foil tube (6) in such a way that the foam front only begins to form or has already formed when the semi-finished product enters the positioning device (12).

5. Method according to one of the preceding claims, wherein in the step of adjusting the position of the outer pipe (1) by means of the positioning device (12) at least one of the two sub-steps is carried out:
e1) adjusting the position of the outer pipe (1) in a y-direction horizontally perpendicular to the direction of manufacture x, if an intended position in the y-direction does not already exist, by carrying out a corresponding displacement of the outer pipe (1) by means of at least one first displacement unit (22a) until the intended position in the y-direction is reached, and/or
e2) adjusting the position of the outer pipe (1) in a z-direction vertically perpendicular to the manufacturing direction x, if an intended position in the z-direction does not already exist, by carrying out a corresponding displacement of the outer pipe (1) by means of at least one second displacement unit (22b) until the intended position in the z-direction is reached,
where steps e1 and e2 can be carried out in any order or steps e1 and e2 can be carried out simultaneously.

6. Method according to claim 5, wherein when adjusting the position of the outer pipe (1) in the z-direction, this position is set with a vertical offset from the intended position in the z-direction, wherein with the offset a deviation of the position of the outer pipe (1) from the intended position of the outer pipe (1) in the z-direction due to at least one of the following factors: weight of the inner pipe, viscosity of the insulating foam, degree of hardening of the insulating foam, temperature of the inner pipe, material of the inner pipe, temperature of the outer pipe is compensated for.

7. Method according to one of the preceding claims, wherein the inner pipe (2) is roughly centered with a predetermined tolerance in the outer pipe (1) by means of a centering device (5a) before the outer pipe (1) with the inner pipe (2) enters the corrugator (11).

8. Method according to one of the preceding claims, wherein the semi-finished product is guided or held in position horizontally transversely to the production direction x immediately after leaving the corrugator (11), in particular continuously, by means of a guide rail (21).

9. Method according to one of the preceding claims, wherein the adjustment of the position of the outer pipe (1) is triggered if, when detecting the position of the longitudinal axis of the outer pipe (1) relative to the position of the longitudinal axis of the at least one inner pipe (2), defined position tolerances of the position of the longitudinal axis of the outer pipe (1) relative to the position of the longitudinal axis of the inner pipe (2) are exceeded.

10. Method according to claim 9,
wherein, during manufacture of thermally insulated line pipes (18) with exactly one inner pipe (2), the position of the outer pipe (1) is adjusted if the longitudinal axes of the outer pipe (1) and the inner pipe (2) are not identical, taking into account the specified positional tolerances, or
wherein, during manufacture of thermally insulated line pipes (18) with more than one inner pipe (2a, 2b), the position of the outer pipe (1) is adjusted if the longitudinal axis of the outer pipe (1) and a geometric center of gravity of the inner pipes (2a, 2b), which are in particular rigidly coupled to one another, are not in an intended relationship to one another, taking into account the specified positional tolerances.

11. Method according to one of the preceding claims, wherein the position of the foam front in the direction of manufacture x is optically detected by initially leaving the outer pipe (1) transparent and only coloring it by means of pigments after the position of the foam front has been detected.

12. Method according to one of the preceding claims, wherein, if a plurality of inner pipes (2a, 2b) are present, these are connected to one another by means of spacer elements (1b) before the foil tube (6) is formed in such a way that they have a rigid configuration relative to one another, wherein spacer elements (1b) are attached continuously at a predefined distance along the inner pipes (2a, 2b), in particular are snapped in as a clip around the inner pipes (2a, 2b).

13. Manufacturing plant (H) for carrying out the method according to one of the preceding claims, comprising the following stations, viewed in succession in the manufacturing direction x:
an insulating foam preparation device comprising a forming shoulder (7) for continuously wrapping the inner pipe (2) with the foil tube (6) and an injection head (8) for introducing the foamable starting material between the foil tube (6) and the inner pipe (2),
an extrusion head (10) for extruding the outer pipe (1) around the inner pipe (2) with the foil tube (6) and the foamable starting material,
a corrugator (11) for generating a corrugation in the outer pipe (11),
a protective tube (9) for protecting the inner pipe (2) with the foil tube (6) and the foamable starting material during extrusion and/or corrugation of the outer pipe (1),
a positioning device (12) for adjusting the position of the outer pipe (1) relative to the inner pipe (2),
a detection device (13) for detecting a position of the longitudinal axis of the outer pipe (1) relative to the position of the longitudinal axis of the at least one inner pipe (2), and
a cooling device (14) for cooling the finished line pipe (18).

14. Manufacturing plant according to claim 13, wherein the positioning device (12) is arranged downstream of the corrugator (11) in the manufacturing direction x.

15. Manufacturing plant according to one of the claims 13 or 14, wherein the positioning device (12) comprises a guide rail (21) arranged directly at the outlet of the corrugator (11), which guides or holds the semi-finished product in position horizontally transversely to the manufacturing direction x.

16. Manufacturing plant according to claim 13 or 14 and claim 15, wherein the positioning device (12) further comprises a displacement device (22; 22a, 22b) for adjusting the position of the outer pipe (1) in the y-direction and/or in the z-direction, wherein the displacement device (22; 22a, 22b) is arranged in the manufacturing direction x downstream of the guide rail (21) at a first changeable distance from the guide rail (21) .

17. Manufacturing plant according to claim 16, wherein the displacement device (22; 22a, 22b) comprises either
a first displacement unit (22a) for adjusting the position of the outer pipe (1) in the y-direction and a second displacement unit (22b) for adjusting the position of the outer pipe (1) in the z-direction, wherein the first displacement unit (22a) and the second displacement unit (22b) are different from each other and are arranged at a second changeable distance from each other in the manufacturing direction x in any order one after the other, or
comprises a single displacement unit (22) for adjusting the position of the outer pipe (1) in the y-direction and in the z-direction,
in particular wherein
the displacement device (22; 22a, 22b) comprises at least two V-channels or rollers for the y-direction and for the z-direction, respectively, which V-channels or rollers for each of the two directions are connected to each other and arranged opposite each other on one side of the outer pipe (1) and aligned in such a way that they displace the outer pipe (1) in the respective y-direction and y-counter-direction or z-direction and z-counter-direction to be adjusted in order to adjust the position of the outer pipe (1), and
the position of the outer pipe (1) is adjustable by means of at least one drive successively in the y-direction and z-direction or vice versa individually for each direction or combined as a simultaneous displacement in the y-direction and in the z-direction.

18. Manufacturing plant according to one of claims 13 to 17 and claim 16, wherein the positioning device (22; 22a, 22b) further comprises adjustment elements for setting a reference position of the displacement device (22; 22a, 22b), which adjustment elements can be operated manually or automatically by means of corresponding servomotors.

19. Manufacturing plant according to one of claims 13 to 18 and claim 16, wherein the positioning device (12) comprises a fixing device (23; 23a, 23b) for holding the outer pipe (1) in the adapted position in the manufacturing direction x at a third changeable distance after the displacement device (22; 22a, 22b), wherein the fixing device (23; 23a, 23b) is formed from one fixing element (23) or from at least two successively arranged fixing elements (23a, 23b).

20. Manufacturing plant according to one of claims 13 to 19, wherein a brake bead (5) is provided before the insulating foam preparation device and a traction bead (15) is provided after the cooling device (14) for tensioning the inner pipe (2) in manufacturing direction x, wherein the brake bead (5) acts mechanically on the inner pipe (2) fed to the manufacturing plant (H) and the traction bead (15) acts mechanically on the finished line pipe (18) leaving the manufacturing plant (H), and the brake bead (5) and the traction bead (15) interact in such a way that they tension the inner pipe (2) in the manufacturing direction x with an intended maximum sag tolerance along the stations of the manufacturing plant (H), wherein the brake bead (5) and the traction bead (15) each has guide elements which are in contact with the inner pipe (2) and the finished line pipe (18), respectively, and are designed in such a way that they each vary a sliding friction in order to set an intended tension of the inner pipe (2).

21. Manufacturing plant according to one of claims 13 to 19, wherein the detection device (13) comprises an X-ray system by means of which the position of the longitudinal axis of the outer pipe (1) can be measured in relation to the position of the longitudinal axis of the at least one inner pipe (2), further comprising a display device by means of which the corresponding measurement results can be output, in particular graphically.

## Revendications

1. Procédé de production en continu d'une conduite thermiquement isolée (18) au moyen d'une installation de production (H), dans lequel la conduite thermiquement isolée (18) comprend, à l'état fini, un tuyau extérieur (1) en plastique LLD-PE ou contenant du LLD-PE, au moins un tuyau intérieur (2) placé dans le tuyau extérieur (1) et une mousse isolante durcie (1a) entre le tuyau intérieur (2) et le tuyau extérieur (1), dans lequel la production de la conduite thermiquement isolée (18) est effectuée dans une direction de production sensiblement horizontale x à travers différentes stations de l'installation de production (H), dans lequel le procédé comprend les étapes suivantes
a) former un tuyau en feuille (6) autour du au moins un tuyau intérieur (1) et introduire un matériau de départ moussable dans le tuyau en feuille (6), lequel matériau de départ se dilate pour former une mousse isolante et la mousse isolante durcit, la mousse isolante durcie (1a) remplissant au moins une partie de l'espace entre le tuyau intérieur (2) et le tuyau extérieur (1) dans la conduite finie (18),
b) faire passer le tuyau intérieur (2) avec le tuyau en feuille (6) et le matériau de départ moussable à travers une tête d'extrusion (10), au moyen de laquelle le tuyau extérieur (1) est extrudé autour du tuyau intérieur (2) avec le tuyau en feuille (6), de sorte qu'un produit semi-fini est formé,
c) former une ondulation du tuyau extérieur dans une onduleuse (11) pour produire un tuyau extérieur ondulé (1),
dans lequel le matériau de départ moussant est formé avant d'être introduit dans le tuyau en feuille (6) de telle sorte qu'il ne commence à se dilater que lorsque le produit semi-fini sort de l'onduleuse (11), formant ainsi un front de mousse,
**caractérisé par** les étapes suivantes
d) détecter une position de l'axe longitudinal du tuyau extérieur ondulé (11) par rapport à la position de l'axe longitudinal du au moins un tuyau intérieur (2) au moyen d'un dispositif de détection (13),
e) si, à l'étape d), les axes longitudinaux ne sont pas disposés dans une position prévue l'un par rapport à l'autre, ajuster la position du tuyau extérieur ondulé (1) par rapport au tuyau intérieur (2) au moyen d'un dispositif de positionnement (12) jusqu'à ce que son axe longitudinal soit disposé dans la position prévue par rapport à l'axe longitudinal du tuyau intérieur (2),
f) fixer le tuyau extérieur (1) dans la position prévue.

2. Procédé selon la revendication 1, dans lequel, lors de l'étape d'ajuster la position du tuyau extérieur (1) au moyen du dispositif de positionnement (12), l'action est exercée exclusivement sur le tuyau extérieur (1).

3. Procédé selon la revendication 1 ou 2, dans lequel le tuyau intérieur (2) est maintenu serré dans l'installation de production (H) dans la direction de production x au moyen d'un bourrelet de freinage (5) en coopération avec un bourrelet de traction (15).

4. Procédé selon l'une des revendications précédentes, dans lequel le matériau de départ moussable est formé avant d'être introduit dans le tuyau de feuille (6) de telle sorte que le front de mousse ne commence à se former ou est déjà formé lorsque le produit semi-fini pénètre dans le dispositif de positionnement (12).

5. Procédé selon l'une des revendications précédentes, dans lequel l'étape d'ajuster la position du tuyau extérieur (1) au moyen du dispositif de positionnement (12) comprend au moins l'une des deux sous-étapes suivantes :
e1) ajuster la position du tuyau extérieur (1) dans une direction y horizontalement perpendiculaire à la direction de production x, si une position prévue dans la direction y n'existe pas encore, en effectuant un déplacement correspondant du tuyau extérieur (1) au moyen d'au moins une première unité de déplacement (22a) jusqu'à ce que la position prévue dans la direction y soit atteinte, et/ou
e2) ajuster la position du tuyau extérieur (1) dans une direction z verticalement perpendiculaire à la direction de production x, si une position prévue dans la direction z n'existe pas encore, en effectuant un déplacement correspondant du tuyau extérieur (1) au moyen d'au moins une deuxième unité de déplacement (22b) jusqu'à ce que la position prévue dans la direction z soit atteinte,
dans lequel les étapes e1 et e2 peuvent être effectuées dans n'importe quel ordre ou les étapes e1 et e2 peuvent être effectuées simultanément.

6. Procédé selon la revendication 5, dans lequel, lors d'ajuster position du tuyau extérieur (1) dans la direction z, cette position est réglée avec un décalage vertical par rapport à la position prévue dans la direction z, le décalage entraînant un écart de la position du tuyau extérieur (1) par rapport à la position prévue du tuyau extérieur (1) dans la direction z en raison d'au moins l'un des facteurs suivants : poids du tuyau intérieur, viscosité de la mousse isolante, degré de durcissement de la mousse isolante, température du tuyau intérieur, matériau du tuyau intérieur, température du tuyau extérieur.

7. Procédé selon l'une des revendications précédentes, dans lequel le tuyau intérieur (2) est grossièrement centré avec une tolérance prédéterminée dans le tuyau extérieur (1) au moyen d'un dispositif de centrage (5a) avant que le tuyau extérieur (1) avec le tuyau intérieur (2) n'entre dans l'onduleuse (11).

8. Procédé selon l'une des revendications précédentes, dans lequel le produit semi-fini est guidé ou maintenu en position horizontalement transversalement à la direction de production x immédiatement après avoir quitté l'onduleuse (11), en particulier en continu, au moyen d'un rail de guidage (21).

9. Procédé selon l'une des revendications précédentes, dans lequel l'ajustement de la position du tuyau extérieur (1) est déclenché si, lors de la détection de la position de l'axe longitudinal du tuyau extérieur (1) par rapport à la position de l'axe longitudinal du au moins un tuyau intérieur (2), des tolérances de position définies de la position de l'axe longitudinal du tuyau extérieur (1) par rapport à la position de l'axe longitudinal du tuyau intérieur (2) sont dépassées.

10. Procédé selon la revendication 9,
dans lequel, lors de la production de conduites thermiquement isolées (18) avec exactement un tuyau intérieur (2), la position du tuyau extérieur (1) est ajustée si les axes longitudinaux du tuyau extérieur (1) et du tuyau intérieur (2) ne sont pas identiques, en tenant compte des tolérances de position spécifiées, ou
dans lequel, lors de la production de conduites thermiquement isolées (18) avec plus d'un tuyau intérieur (2a, 2b), la position du tuyau extérieur (1) est ajustée si l'axe longitudinal du tuyau extérieur (1) et un centre de gravité géométrique des tubes intérieurs (2a, 2b), qui sont en particulier accouplés rigidement l'un à l'autre, ne sont pas dans une relation voulue l'un par rapport à l'autre, en tenant compte des tolérances de position spécifiées.

11. Procédé selon l'une des revendications précédentes, dans lequel la position du front de mousse dans la direction de production x est détectée optiquement en laissant initialement le tuyau extérieur (1) transparent et en ne le colorant au moyen de pigments qu'après que la position du front de mousse a été détectée.

12. Procédé selon l'une des revendications précédentes, dans lequel, si plusieurs tuyaux intérieurs (2a, 2b) sont présents, ceux-ci sont reliés les uns aux autres au moyen d'éléments d'écartement (1b) avant que le tuyau de feuille (6) ne soit formé de manière à ce qu'ils aient une configuration rigide les uns par rapport aux autres, les éléments d'écartement (1b) étant fixés de manière continue à une distance prédéfinie le long des tuyaux intérieurs (2a, 2b), en particulier sont encliquetés comme un clip autour des tuyaux intérieurs (2a, 2b).

13. Installation de production (H) pour la mise en œuvre du procédé selon l'une des revendications précédentes, comprenant les stations suivantes, vues successivement dans la direction de production x :
un dispositif de préparation de mousse isolante comprenant un épaulement de formage (7) pour envelopper en continu le tuyau intérieur (2) avec le tuyau en feuille (6) et une tête d'injection (8) pour introduire le matériau de départ moussable entre le tuyau en feuille (6) et le tuyau intérieur (2),
une tête d'extrusion (10) pour extruder le tuyau extérieur (1) autour du tuyau intérieur (2) avec le tuyau en feuille (6) et le matériau de départ moussant,
un ondulateur (11) pour générer une ondulation dans le tuyau extérieur (11),
un tuyau de protection (9) pour protéger le tuyau intérieur (2) avec le tuyau en feuille (6) et le matériau de départ moussable pendant l'extrusion et/ou l'ondulation du tuyau extérieur (1),
un dispositif de positionnement (12) pour ajuster la position du tuyau extérieur (1) par rapport au tuyau intérieur (2),
un dispositif de détection (13) pour détecter une position de l'axe longitudinal du tuyau extérieur (1) par rapport à la position de l'axe longitudinal d'au moins un tuyau intérieur (2), et
un dispositif de refroidissement (14) pour refroidir la conduite finie (18).

14. Installation de production selon la revendication 13, dans laquelle le dispositif de positionnement (12) est disposé en aval de l'onduleuse (11) dans la direction de production x.

15. Installation de production selon l'une des revendications 13 ou 14, dans laquelle le dispositif de positionnement (12) comprend un rail de guidage (21) disposé directement à la sortie de l'onduleuse (11), qui guide ou maintient le produit semi-fini en position horizontale transversalement à la direction de production x.

16. Installation de production selon la revendication 13 ou 14 et la revendication 15, dans laquelle le dispositif de positionnement (12) comprend en outre un dispositif de déplacement (22 ; 22a, 22b) pour ajuster la position du tuyau extérieur (1) dans la direction y et/ou dans la direction z, dans laquelle le dispositif de déplacement (22 ; 22a, 22b) est disposé dans la direction de production x en aval du rail de guidage (21) à une première distance modifiable du rail de guidage (21).

17. Installation de production selon la revendication 16, dans laquelle le dispositif de déplacement (22 ; 22a, 22b) comprend soit
une première unité de déplacement (22a) pour ajuster la position du tuyau extérieur (1) dans la direction y et une deuxième unité de déplacement (22b) pour ajuster la position du tuyau extérieur (1) dans la direction z, la première unité de déplacement (22a) et la deuxième unité de déplacement (22b) étant différentes l'une de l'autre et disposées à une deuxième distance modifiable l'une de l'autre dans la direction de production x, dans un ordre quelconque l'une après l'autre, soit
comprend une seule unité de déplacement (22) pour ajuster la position du tuyau extérieur (1) dans la direction y et dans la direction z,
en particulier dans laquelle
le dispositif de déplacement (22 ; 22a, 22b) comprend au moins deux canaux en V ou rouleaux pour la direction y et pour la direction z, respectivement, lesquels canaux en V ou rouleaux pour chacune des deux directions sont reliés l'un à l'autre et disposés en face l'un de l'autre sur un côté du tuyau extérieur (1) et alignés de telle sorte qu'ils déplacent le tuyau extérieur (1) dans la direction y et la contre-direction y ou la direction z et la contre-direction z respectives à ajuster afin d'ajuster la position du tuyau extérieur (1), et que
la position du tuyau extérieur (1) est ajustée au moyen d'au moins un entraînement successivement dans l'axe des y et dans l'axe des z ou vice versa, individuellement pour chaque direction ou combiné comme un déplacement simultané dans l'axe des y et dans l'axe des z.

18. Installation de production selon l'une des revendications 13 à 17 et la revendication 16, dans laquelle le dispositif de positionnement (22 ; 22a, 22b) comprend en outre des éléments de réglage pour définir une position de référence du dispositif de déplacement (22 ; 22a, 22b), ces éléments de réglage pouvant être actionnés manuellement ou automatiquement au moyen de servomoteurs correspondants.

19. Installation de production selon l'une des revendications 13 à 18 et la revendication 16, dans laquelle le dispositif de positionnement (12) comprend un dispositif de fixation (23 ; 23a, 23b) pour maintenir le tuyau extérieur (1) dans la position adaptée dans la direction de production x à une troisième distance modifiable après le dispositif de déplacement (22 ; 22a, 22b), le dispositif de fixation (23 ; 23a, 23b) étant formé d'un élément de fixation (23) ou d'au moins deux éléments de fixation (23a, 23b) agencés l'un après l'autre.

20. Installation de production selon l'une des revendications 13 à 19, dans laquelle un bourrelet de freinage (5) est prévu avant le dispositif de préparation de la mousse isolante et un bourrelet de traction (15) est prévu après le dispositif de refroidissement (14) pour tendre le tuyau intérieur (2) dans la direction de production x, dans laquelle le bourrelet de freinage (5) agit mécaniquement sur le tuyau intérieur (2) alimentant l'installation de production (H) et le bourrelet de traction (15) agit mécaniquement sur la conduite finie (18) quittant l'installation de production (H), et le bourrelet de freinage (5) et le bourrelet de traction (15) interagissent de manière à tendre la conduite intérieure (2) dans la direction de production x avec une tolérance d'affaissement maximale prévue le long des stations de l'usine de production (H), le bourrelet de freinage (5) et le bourrelet de traction (15) ayant chacun des éléments de guidage qui sont en contact avec le tuyau intérieur (2) et la conduite finie (18), respectivement, et sont conçus de manière à faire varier chacun un frottement de glissement afin d'établir une tension prévue du tuyau intérieur (2).

21. Installation de production selon l'une des revendications 13 à 19, dans laquelle le dispositif de détection (13) comprend un système à rayons X permettant de mesurer la position de l'axe longitudinal du tuyau extérieur (1) par rapport à la position de l'axe longitudinal d'au moins un tuyau intérieur (2), et comprend en outre un dispositif d'affichage permettant d'afficher les résultats de mesure correspondants, en particulier sous forme de graphiques.
